(19) Europäisches Patentamt

European Patent Office

Office européen des brevets

(11) **EP 2 902 890 A2**

(12) **EUROPEAN PATENT APPLICATION**

(43) Date of publication:
**05.08.2015 Bulletin 2015/32**

(51) Int Cl.:
*G06F 3/043* (2006.01)

(21) Application number: **15151737.2**

(22) Date of filing: **20.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.01.2014 US 201461934447 P**
**05.01.2015 US 201514589943**

(71) Applicant: **Samsung Display Co., Ltd.**
**Gyeonggi-Do (KR)**

(72) Inventor: **Xue, Jiuzhi**
**San Jose, CA California 95112 (US)**

(74) Representative: **Dr. Weitzel & Partner**
**Patent- und Rechtsanwälte mbB**
**Friedenstrasse 10**
**89522 Heidenheim (DE)**

(54) **Multi-touch acoustic beam sensing apparatus and driving method thereof**

(57) A touch panel (600) includes: a touch area; a collimated acoustic wave generator (612,614,616) at a periphery of the touch area to generate a collimated acoustic wave (606, 608, 610) across the touch area; and a detector (618, 620, 622) at the periphery of the touch area to detect the collimated acoustic wave.

FIG. 6

EP 2 902 890 A2

**Description**

**CROSS-REFERENCE TO RELATED APPLICATION**

**BACKGROUND**

Touch panels capable of detecting a user's touch are ubiquitous in portable electronic devices, such as mobile phones, laptops, tablets, etc., and are expanding into large panel display devices, such as televisions, computer monitors, etc. Various different display devices may include liquid crystal displays (LCDs), organic light emitting displays (OLEDs), plasma display panels, etc.

While touch panels based on capacitive and resistive touch technologies have become increasingly popular in portable electronic devices due to their ability to support true multi-touch events, these technologies can be expensive to implement for large panel display devices, and may degrade optical performance of the display devices. Touch panels based on optical sensing technologies may also have various issues, such as sensitivity to ambient light, mechanical stability, increased bezel size of the display device, etc., and may not be capable of supporting true multi-touch events.

On the other hand, touch panels based on acoustic technologies may be cost effective, and may have minimal or reduced impact on the performance and size of the display devices. However, existing touch panels based on acoustic technologies also may not support true multi-touch events. Thus, a touch panel based on acoustic technologies capable of supporting true multi-touch events is desired.

The above information disclosed in this Background section is only for enhancement of understanding of the background of the invention and therefore it may contain information that does not form the prior art that is already known to a person of ordinary skill in the art.

**SUMMARY**

Aspects of embodiments of the present invention relate to a touch panel based on acoustic technologies capable of supporting true multi-touch events.

According to an embodiment of the present invention a display device includes: a display area; and a touch panel on the display area, the touch panel including: a substrate covering the display area; a touch area on the substrate corresponding to the display area; a collimated acoustic wave generator at a periphery of the substrate to excite a collimated acoustic wave across the touch area; and a detector at the periphery of the substrate to detect the collimated acoustic wave.

The collimated acoustic wave generator may include a linear array of piezoelectric transducers.

The linear array of piezoelectric transducers may be configured to control a scanning direction of the collimated acoustic wave by adjusting a phase delay between each of the piezoelectric transducers.

The collimated acoustic wave generator may include a plurality of collimated acoustic wave generators, and at least one of the plurality of collimated acoustic wave generators may be configured to generate a collimated acoustic wave having a different frequency than that of another one of the collimated acoustic wave generators.

The plurality of collimated acoustic wave generators may be arranged non-collinearly at the periphery of the substrate.

Each of the plurality of collimated acoustic wave generators may be configured to scan collimated acoustic waves across the touch area, and at least one of the collimated acoustic waves may reach a first touch event concurrently when another one of the collimated acoustic waves reach a second touch event.

The detector may be configured to detect disturbances of the collimated acoustic wave when a touch event is in a path of the collimated acoustic wave.

The detector may be configured to detect a source of the disturbances according to frequency or time of origin.

The detector may include a plurality of detectors, and the plurality of detectors may be configured to triangulate a coordinate of the touch event.

According to another embodiment of the present invention a touch panel includes: a touch area; a collimated acoustic wave generator at a periphery of the touch area to generate a collimated acoustic wave across the touch area; and a detector at the periphery of the touch area to detect the collimated acoustic wave.

The collimated acoustic wave generator may include a linear array of piezoelectric transducers.

The linear array of piezoelectric transducers may be configured to control a scanning direction of the collimated acoustic wave by adjusting a phase delay between each of the piezoelectric transducers.

The collimated acoustic wave generator may include a plurality of collimated acoustic wave generators, and at least one of the plurality of collimated acoustic wave generators may be configured to generate a collimated acoustic wave having a different frequency than that of another one of the collimated acoustic wave generators.

The plurality of collimated acoustic wave generators may be arranged non-collinearly at the periphery of the touch area.

Each of the plurality of collimated acoustic wave generators may be configured to scan collimated acoustic waves across the touch area, and at least one of the collimated acoustic waves may reach a first touch event concurrently when another one of the collimated acoustic waves reach a second touch event.

The detector may be configured to detect disturbances of the collimated acoustic wave when a touch event is in a path of the collimated acoustic wave.

The detector may be configured to detect a source of the disturbances according to frequency or time of origin.

The detector may include a plurality of detectors, and the plurality of detectors may be configured to triangulate a coordinate of the touch event.

According to another embodiment of the present invention a method for detecting a touch event may include: scanning a collimated acoustic wave across a touch area of a touch panel; receiving, at the touch area, the touch event; detecting the touch event from disturbances of the collimated acoustic wave corresponding to the touch event; and calculating a position of the touch event.

The scanning of the collimated acoustic wave may include: exciting the collimated acoustic wave from a linear array of piezoelectric transducers; and controlling a scanning direction of the collimated acoustic wave by controlling a phase delay between each transducer of the linear array of piezoelectric transducers.

The collimated acoustic wave may form an orthogonal base in a time domain, and the calculating of the position of the touch event may utilize the orthogonal base.

The method may further include: reducing boundary reflections of the collimated acoustic wave at boundaries of the touch panel by absorption and/or impedance matching.

## BRIEF DESCRIPTION OF THE DRAWINGS

The above and other aspects and features of the present invention will become apparent to those skilled in the art from the following detailed description of the example embodiments with reference to the accompanying drawings.

FIG. 1 is a schematic diagram illustrating a touch panel according to some embodiments of the present invention.
FIGS. 2A and 2B illustrate example arrangements of generators and detectors according to some embodiments of the present invention.
FIG. 3 is a simulated ripple tank wave pattern of an approximately collimated beam of a propagating scalar wave generated by a linear array of wave generators.
FIG. 4 illustrates an example of generators scanning collimated acoustic wave beams in various directions through a touch panel according to some embodiments of the present invention.
FIG. 5 illustrates an example of a generator generating a collimated acoustic wave beam according to some embodiments of the present invention.
FIG. 6 illustrates an example of three generators, each generating a collimated acoustic wave beam according to some embodiments of the present invention.
FIG. 7 illustrates methods of calculating a location of a touch event by scanning acoustic wave beams.
FIG. 8 illustrates a method of detecting a touch event by scanning a collimated acoustic wave beam across a touch panel according to some embodiments of the present invention.

## DETAILED DESCRIPTION

Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey some of the aspects and features of the present invention to those skilled in the art. Accordingly, processes, elements, and techniques that are not necessary to those having ordinary skill in the art for a complete understanding of the aspects and features of the present invention are not described with respect to some of the embodiments of the present invention. Unless otherwise noted, like reference numerals denote like elements throughout the attached drawings and the written description, and thus, descriptions thereof will not be repeated. In the drawings, the relative sizes of elements, layers, and regions may be exaggerated for clarity.

It will be understood that, although the terms "first," "second," "third," etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section described below could be termed a second element, component, region, layer or section, without departing from the spirit and scope of the present invention.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that when an element or layer is referred to as being "on," "connected to," or "coupled to" another element or layer, it can be directly on, connected to, or coupled to the other element or layer, or one or more intervening elements or layers may be present. However, when an element or layer is referred to as being "directly on," "directly connected to," or "directly coupled to" another element or layer, there are no intervening elements or layers present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises" and/or "comprising," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, the use of "may" when describing embodiments of the present invention refers to "one or more embodiments of the present invention." Also, the term "exemplary" is intended to refer to an example or illustration.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

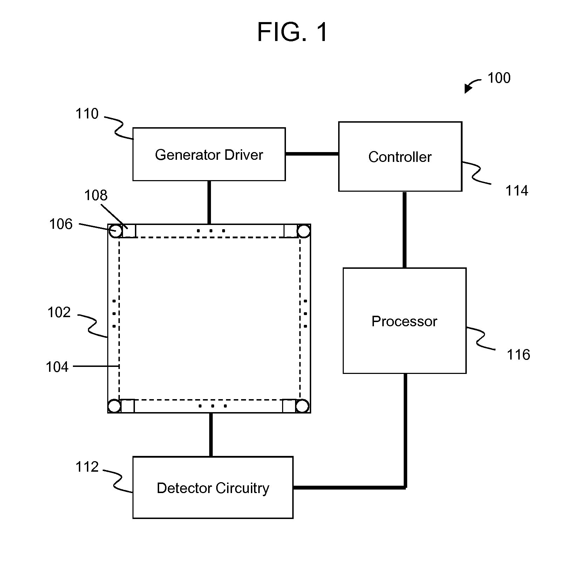

FIG. 1 is a schematic diagram illustrating a touch panel according to some embodiments of the present invention.

Referring to FIG. 1, a touch panel 100 includes a substrate 102, a touch area 104, generators 106 (e.g., collimated wave beam generators (e.g., collimated wave beam acoustic oscillators)) coupled to the substrate 102, detectors 108 (e.g., detection sensors) coupled to the substrate 102, a generator driver 110 (e.g., a phased array driver) coupled to the generators 106, a detector circuitry 112 (e.g., a detector array circuitry) coupled to the detectors 108, a controller 114 (e.g., a sensed data controller), and a processor 116 (e.g., a touch and image processor).

The substrate 102 may include a transparent glass substrate (e.g., a glass screen of a display device), but the present invention is not limited thereto, and the substrate 102 may include any suitable substrate capable of propagating an acoustic wave signal and receiving a user's touch. If the substrate 102 includes the glass screen of a display device, the substrate 102 may cover (e.g., overlap) a display area of the display device such that the touch area 104 corresponds to the display area of the display device. The display device may display images at the display area that are transmitted through the touch area 104 of the touch panel 100. The display device may be a liquid crystal display (LCD), an organic light emitting display (OLED), a plasma display panel, etc.

The generators 106 may be arranged at a periphery (or edge) of the touch area 104 of the substrate 102 and may be coupled to the substrate 102. Each of the generators 106 may include a linear array of acoustic wave generators (e.g., a linear array of multiple piezoelectric transducers) that may be driven to generate acoustic waves in the substrate 102 with a same frequency and substantially the same amplitude. Interference between the acoustic waves from each acoustic wave generators may result in a collimated acoustic wave (or beam), and a pre-determined time lag or a phase difference between the acoustic wave generators may determine the propagation direction of the acoustic beam along a surface of the substrate 102. However, the present invention is not limited thereto, and the generators 106 may include any suitable generator capable of generating directional collimated acoustic waves (or beams) at specified frequencies.

The detectors 108 may be arranged at the periphery (or edge) of the touch area 104, and may be coupled to the substrate 102. Each of the detectors 108 may include a piezoelectric transducer or an array of piezoelectric transducers to detect acoustic waves (or beams) at an oscillation frequency (e.g., a predetermined oscillation frequency). However, the present invention is not limited thereto, and the detectors 108 may include any suitable sensor capable of detecting acoustic waves (or beams) at specified frequencies.

In some embodiments, the generators 106 may also detect acoustic waves (or beams), and the detectors 108 may also generate directional collimated acoustic waves (or beams) at specified frequencies.

The generator driver 110 is coupled to the generators 106, and provides driving voltages (e.g., sinusoidal voltages) with predetermined time lags or phase differences between each of the acoustic wave generators to drive the generators 106 to directionally scan the collimated acoustic waves (or beams) through the substrate 102 at a frequency (e.g., predetermined frequency).

The detector circuitry 112 receives signals (e.g., sensed electrical signals) corresponding to the detected acoustic waves or beams from the detectors 108. The detectors 108 may be listening devices, such as microphones, that convert acoustic waves to electric signals. The detectors 108 may be a piezoelectric transducer, and an acoustic wave or vibration may result in an electric charge separation or voltage that may be detected by a detection circuitry, which may include a pre-amplifier. The detector circuitry 112 transmits the received signals to the processor 116.

The detector circuitry 112 receives and pre-processes the detected signals from the detectors 108, and determines the correlation of the detected acoustic wave to the generated and collimated acoustic beam. If disturbances to the generated acoustic wave are detected, the received signals then indicate that there may be a touch event received in the touch area 104. The detection circuitry 112 may process and determine a touch location, and report the location to the processor 116. The detection circuitry 112 may alternatively report sensed data to the processor 116, which in turn determines the touch location.

The processor 116 may send out commands to the controller 114, so that the acoustic waves scan the entire or substantially entire touch area 104, and locations of all touch events are calculated and reported. The processor 116 may be interfaced with the CPU of the display device, and the CPU communicates with the processor 116 to initiate the touch detection process. Upon receiving the report on the touch locations from the processor 116, the CPU may communicated through a graphic process unit (GPU) to have the touch locations displayed on the display panel.

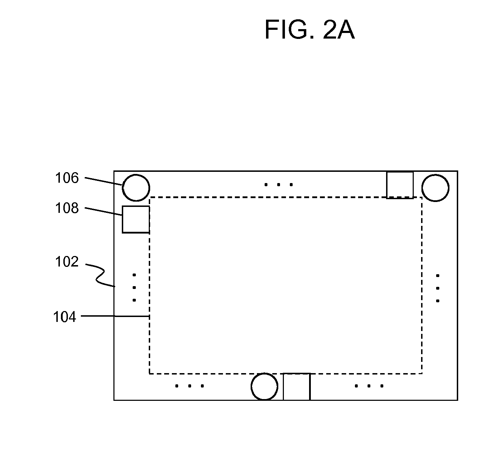

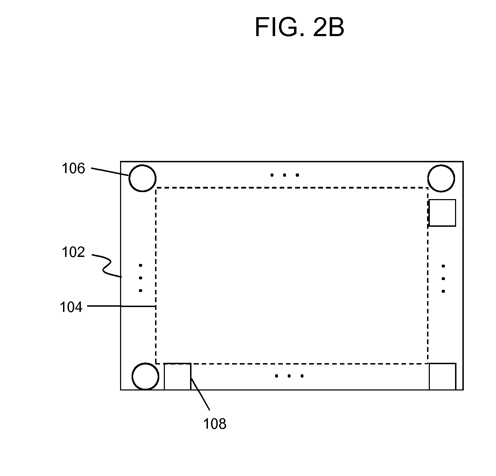

FIGS. 2A and 2B illustrate example arrangements of the generators and the detectors according to some embodiments of the present invention. However, the present invention is not limited to the example arrangements of the generators and the detectors shown in FIGS. 2A and 2B.

Referring to FIG. 2A, the generators 106 and the detectors 108 may be alternately arranged around a periphery of the substrate 102. FIG. 2A shows at least three generators 106 and at least three detectors 108 that are alternately and non-collinearly arranged around a periphery of the substrate 102, but the present invention is not limited thereto, so long as there is at least one generator 106 to generate and directionally scan the collimated acoustic waves (or beams), and at least one detector 108 to detect the collimated acoustic waves (or beams). However, the use of three (or more) generators 106 that are arranged non-collinearly around the periphery of the substrate 102 may reduce positional ambiguity and dead zones, and may accommodate the sensing of more simultaneous touch events. Similarly, the use of three (or more) detectors 108 that are arranged non-collinearly around the periphery of the substrate 102 may reduce ambiguity of detecting a location of the touch events.

Referring to FIG. 2B, the generators 106 may be arranged along first and second adjacent sides of the substrate 102, and the detectors 108 may be arranged along third and fourth adjacent sides of the substrate 102. FIG. 2B shows at least three generators 106 and at least three detectors 108 that are arranged non-collinearly around a periphery of the substrate 102, but the present invention is not limited thereto, so long as there is at least one generator 106 to generate and directionally scan the collimated acoustic waves (or beams), and at least one detector 108 to detect the collimated acoustic waves (or beams). However, the use of three (or more) generators 106 that are arranged non-collinearly along the first and second sides of the substrate 102 may reduce positional ambiguity and dead zones, and may accommodate the sensing of more simultaneous touch events. Similarly, the use of three (or more) detectors 108 that are arranged non-collinearly along the third and fourth sides of the substrate 102 may reduce ambiguity of detecting a location of the touch events.

As described in further detail below, the generators 106 may directionally scan collimated acoustic wave beams across the substrate 102, and the detectors 108 may determine a touch location of a touch event in the path of the collimated acoustic wave beams.

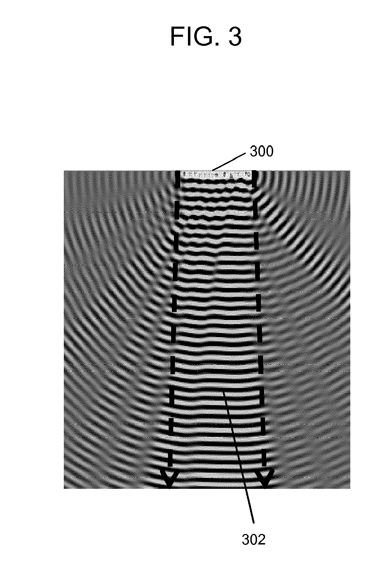

FIG. 3 is a simulated ripple tank wave pattern of an approximately collimated beam of a propagating scalar wave generated by a linear array of wave generators. The simulation shown in FIG. 3 is for illustrative purposes only, and should not be construed as limiting.

Referring to FIG. 3, a linear array of 16 wave generators 300 (e.g., piezoelectric transducers) generates the approximately collimated wave beam 302 of the propagating scalar wave (such as acoustic waves). The collimation of the beam 302 depends on the size and the oscillation frequency of each of the wave generators 300. The propagation direction may be controlled by the phase delay or time lag between adjacent wave generators 300. For example, by adjusting the phase among the adjacent wave generators 300, the direction and collimation of the propagating acoustic wave 302 may be controlled. Further, the collimated acoustic wave 302 may be coded, for example, the waves may have different frequencies, and may be pulse trains with predetermined durations of pules, separation between the pulses, and the number of pulses.

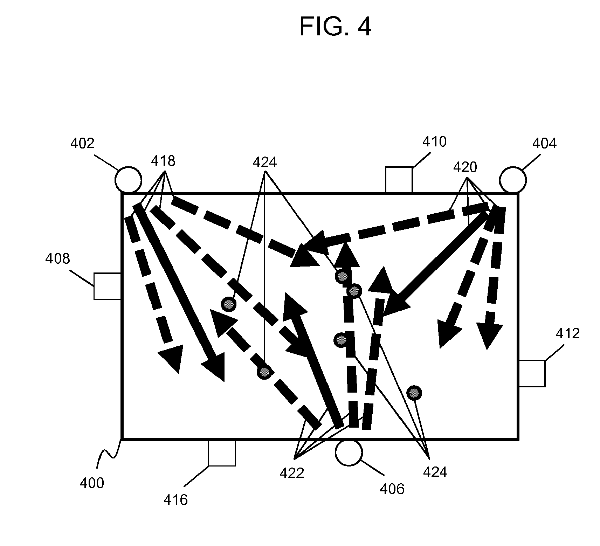

Accordingly, as will be described further with reference to FIG. 4, collimated acoustic wave beams may be scanned across the touch panel in various directions during one frame by controlling the phase delay between the generators of the linear array of generators (e.g., acoustic phased array).

FIG. 4 illustrates an example of generators (e.g., acoustic phased arrays) scanning collimated acoustic wave beams in various directions through a touch panel according to some embodiments of the present invention.

Referring to FIG. 4, a touch panel 400 includes generators (e.g., acoustic phased arrays) 402, 404, and 406, and detectors (e.g., detection sensors) 408, 410, 412, and 416. However, the number of generators and the number of detectors are not limited thereto.

The generator 402 generates a sequence of substantially collimated acoustic wave beams 418 that are directionally scanned (e.g., one-by-one) through the touch panel 400. For example, the generator 402 may excite one of the collimated acoustic wave beams 418 (e.g., the arrow with the solid line of the collimated acoustic wave beams 418 shown in FIG. 4) during an interval of time (e.g., a predetermined interval of time) of one frame period in a first direction, and may excite another one of the collimated acoustic wave beams 418 (e.g., one of the arrows with the dotted line of the collimated acoustic wave beams 418 shown in FIG. 4) during a subsequent interval of time (e.g., a subsequent predetermined interval of time) of the one frame period in a second direction different from the first direction, until each of the collimated acoustic wave beams 418 have been excited in the sequence.

The generator 404 generates a sequence of substantially collimated acoustic wave beams 420 that are directionally scanned (e.g., one-by-one) through the touch panel 400. For example, the generator 404 may excite one of the collimated acoustic wave beams 420 (e.g., the arrow with the solid line of the collimated acoustic wave beams 420 shown in FIG. 4) during an interval of time (e.g., a predetermined interval of time) of the one frame period in a third direction, and may excite another one of the collimated acoustic wave beams 420 (e.g., one of the arrows with the dotted line of the collimated acoustic wave beams 420 shown in FIG. 4) during a subsequent interval of time (e.g., a subsequent predetermined interval of time) of the one frame period in a fourth direction different from the third direction, until each of the collimated acoustic wave beams 420 have been excited in the sequence.

The generator 406 generates a sequence of substantially collimated acoustic wave beams 422 that are directionally scanned (e.g., one-by-one) through the touch panel 400. For example, the generator 406 may excite one of the collimated acoustic wave beams 422 (e.g., the arrow with the solid line of the collimated acoustic wave beams 422 shown in FIG. 4) during an interval of time (e.g., a predetermined interval of time) of the one frame period in a fifth direction, and may excite another one of the collimated acoustic wave beams 422 (e.g., one of the arrows with the dotted line of the collimated acoustic wave beams 422 shown in FIG. 4) during a subsequent interval of time (e.g., a subsequent predetermined interval of time) of the one frame period in a sixth direction different from the fifth direction, until each of the collimated acoustic wave beams 422 have been excited in the sequence.

By exciting each of the substantially collimated acoustic wave beams 418, 420, and 422 sequentially in a different direction during the one frame, the collimated acoustic wave beams 418, 420, and 422 may be scanned across an entire surface or substantially the entire surface of the touch panel 400, thereby eliminating or reducing positional ambiguities, reducing dead zones, and enabling simultaneous detection of multiple touch events.

In some embodiments, the propagation direction of the collimated acoustic wave beams 418, 420, and 422 may be controlled by the phase delay between each of the acoustic wave generators (e.g., transducers) within the generators (e.g., acoustic phased arrays) 402, 404, and 406. For example, by adjusting the phase delay between the acoustic wave generators, the direction and collimation of the collimated acoustic wave beams 418, 420, and 422 may be controlled.

In some embodiments, the collimated acoustic wave beams 418, 420, and 422 may be individually coded (e.g., have different frequencies or in pulse trains of predetermined pulse widths and separations between pulses and the number of pulses) so that the beams are uniquely identifiable by the detectors 408, 410, 412, and 416. However, the present invention is not limited thereto, for example, the collimated acoustic wave beams 418, 420, and 422 may be uniquely identifiable based on time of origin (e.g., a time when the beam is generated and received), or spatial arrangement (e.g., spatial arrangement of the generators 402, 404, and 406, the detectors 408, 410, 412, and 416, the direction of the collimated acoustic wave beams 418, 420, and 422, or combinations thereof).

In some embodiments, boundary effects, which may primarily be reflected acoustic wave beams due to the boundaries (e.g., periphery) of the touch panel 400, may be minimized or reduced by absorption and/or acoustic impedance matching. For example, a material with low elastic constant (e.g., much smaller than the elastic constant of the substrate) and high viscosity may be used to attach the touch panel to the display panel, and the material may significantly dampen (e.g., absorb) the acoustic wave reaching the material. Alternatively, a material with viscoelastic property between that of the touch panel and the display panel that it is mounted to may be used to impedance match the two panels, resulting in minimal reflection of the acoustic wave at the periphery of the touch panel. The acoustic wave maybe dampened within the display panel and further away from the touch panel to reduce the boundary effects. However, the present invention is not limited thereto, for example, algorithms may be used to reject (or compensate for) the detected boundary effects.

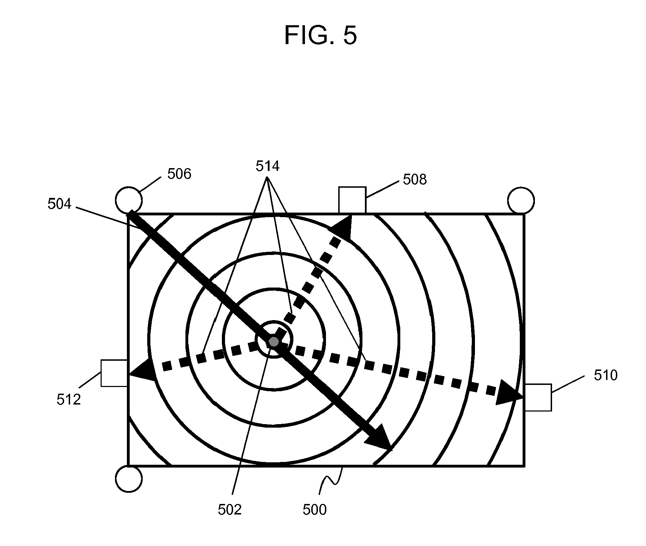

As will be described in further detail below with reference to FIGS. 5 through 7, touch events 424 that are in the path of one or more collimated acoustic wave beams 418, 420, and 422 may be detected by disturbing (e.g., scattering, absorbing, or reflecting) a portion of the one or more collimated acoustic wave beams 418, 420, and 422.

FIG. 5 illustrates an example of a generator (e.g., acoustic phased array) exciting a collimated acoustic wave beam according to some embodiments of the present invention.

Referring to FIG. 5, a touch panel 500 receives a touch event 502 in the path of a collimated acoustic wave beam 504 excited by one generator (e.g., acoustic phased array) 506 from among the generators (e.g., acoustic phased arrays) 506, 508, and 510. The touch event 502 disturbs (e.g., scatters, absorbs, or reflects) the propagating collimated acoustic wave beam 504 by re-directing a portion of the collimated acoustic wave beam 504 from the point of the touch event 502 in all directions, as represented by the circles surrounding the touch event 502.

Detectors 508, 510, and 512, arranged at the periphery of the touch panel 500, may identify the disturbed or scattered acoustic beams 514 of the collimated acoustic wave beam 504 based on, for example, frequency and/or time of origin of the collimated acoustic wave beam 504. The detectors 508, 510, and 512 may triangulate the location of the interfering touch event 502, as will be further described below.

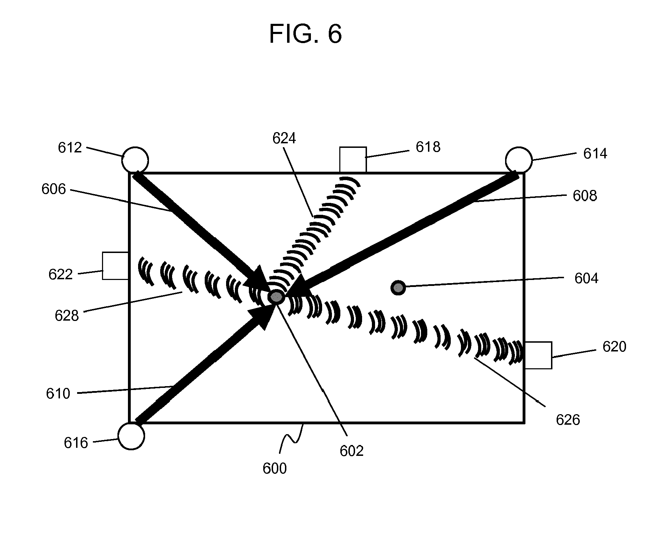

FIG. 5 shows the collimated acoustic wave beam 504 being excited by the one generator 506. However, as will be described below with references to FIG. 6, additional generators may be used when the detectors 508, 510, and 512 can distinguish between the additional generators (e.g., by frequency, time, and/or spatial arrangement as described above with reference to FIG. 4) to accommodate more touch events, and to achieve increased accuracy over the entire surface of the touch panel 500.

FIG. 6 illustrates an example of three generators (e.g., acoustic phased arrays) each generating a collimated acoustic wave beam according to some embodiments of the present invention.

Referring to FIG. 6, a touch panel 600 receives first and second touch events 602 and 604. The first touch event 602 is in the path of first, second, and third collimated acoustic wave beams 606, 608, and 610, respectively excited by first, second, and third generators (e.g., acoustic phased arrays) 612, 614, and 616. Each of the first, second, and third acoustic wave beams 606, 608, and 610 may or may not reach the first touch event 602 at the same time.

Since the three collimated acoustic wave beams 606, 608, and 610 are uniquely identifiable by detectors 618, 620, and 622 (e.g., by frequency, time, and/or spatial arrangement), the detectors 618, 620, and 622 may triangulate the location of the first touch event 602. For example, by comparing time of arrival of re-directed waves 624, 626, and 628 by the first touch event 602, the relative distance of the touch event 602 may be calculated.

Further, because the first, second, and third generators 612, 614, and 616 are scanning the collimated acoustic wave beams 606, 608, and 610 in a direction towards the first touch event 602 during a specific interval of time (e.g., a predetermined interval of time) during one frame, the first, second, and third collimated acoustic wave beams 606, 608, and 610 will generally miss the second touch event 604 during their respective specific interval of time of in the frame. However, as each acoustic wave beam 606, 608, and 610 is subsequently scanned through the touch panel in its prescribed sequence during the one frame, the second touch event 604 may be subsequently or concurrently (e.g., simultaneously) detected when at least one of the acoustic wave beams 606, 608, and 610 are being scanned in the direction of the second touch event 604. In other words, since each of the generators 612, 614, and 616 are configured to scan collimated acoustic wave beams across the touch area, at least one of the collimated acoustic wave beams may reach the first touch event 602 concurrently (e.g., simultaneously) when another one of the collimated acoustic waves beams reach the second touch event 604.

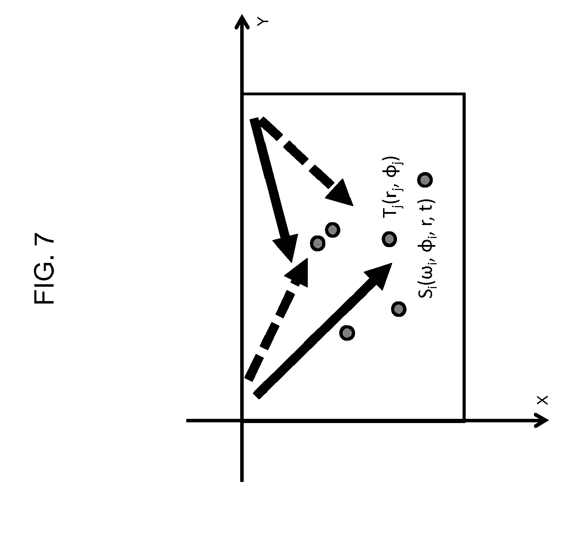

When the first touch event 602 disturbs the collimated acoustic wave beams 606, 608, and 610, the dominant effect is that a small percentage of the beams are re-directed (e.g., scattered, absorbed, or reflected) as shown by the re-directed waves 624, 626, and 628. The secondary effect, that is disturbances of the re-directed waves 624, 626, and 628 by the second touch event 604, is negligible. Thus, as will be described further below with reference to FIG. 7, the detected signal is the summation of all reflected and primary acoustic waves.

FIG. 7 illustrates methods of calculating a location of a touch event by scanning the acoustic wave beams as described herein.

Referring to FIG. 7, an i-th primary acoustic wave beam $S_i$ is scanned in a direction during an interval of time $t$, and is generally represented by $S_i(\omega_i, \phi_i, r, t)$. A touch event $T_j$ is a j-th event, and is in the path of a j-th primary acoustic wave beam $S_j$. The touch event $T_j$ is positioned at polar coordinate $(r_j, \phi_j)$. The j-th primary acoustic wave beam $S_j$ may be determined by the following equation (1).

$$(1) \qquad S_j(t) = \sum_i S_i(\omega_i, \Phi_i, t) * f(\Phi_i, \Phi_j, r_j)$$

In equation (1), $f(\phi_i, \phi_j, r_j)$ is a function that is approximately equal to 1 when the primary acoustic wave beam reaches the touch event, and approximately equal to 0 when the primary acoustic wave beam scans away from the touch event. That is, the angular dependence $\phi$ of the $f(\phi_i, \phi_j, r_j)$ is approximately a delta function: $\delta(\phi_i - \phi_j)$. The $r_j$ dependence corresponds to the scanning sequence (time of origin), acoustic velocity, and polar coordinate $r_j$ (distance).

A detected wave by a k-th detector is the summation of all acoustic waves that reaches the detector, and may be determined by the following equation (2).

$$(2) \qquad D_k(t) = \sum_j S_j(t) * p(\Phi_j, r_j)$$

In equation (2), $p(\phi_j, r_j)$ is a function dependent on the reflection of the primary acoustic wave beam $S_j$ off of the j-th touch event $T_j$, and the $r_j$ (distance) dependence determines the time for the wave to reach the k-th detector $D_k$.

In addition to travelling in different directions when being scanned, the scanning primary acoustic wave beams form an orthogonal base in the time domain as represented by the following equation (3).

$$(3) \qquad \int S_i(\omega_i, t) * S_j(\omega_j, t)dt = 1, \text{ if } i=j$$

$$= 0, \text{ if } i \neq j$$

For sinusoidal acoustic waves, waves oscillating at different frequencies form an orthogonal base.

To isolate the touch events in the detected acoustic wave, orthogonal base property is used as represented by the following equation (4).

$$(4) \qquad \int D_k(t) * S_j(\omega_j, t)dt$$

The quantity calculated by equation (4) will only have information about specific touch events that are in the path of the j-th primary acoustic wave beam $S_j$.

This isolation operation is applied to all detectors. In the event that there are multiple touch events detected by one propagating acoustic wave beam, it may be difficult to resolve the locations of the touch events. However, as long as there are at least 3 active generators (e.g., acoustic phased arrays), and the generators are arranged non-collinearly (e.g., not arranged collinearly), a specific touch event will be individually probed by at least one single collimated acoustic wave beam. Triangulation of time of flight from multiple detectors can uniquely determine the location and/or the coordinates of each of the touch events.

According to one embodiment of the present invention, for example, to achieve about 3mm of touch resolution for a 46" panel, 533 scans of collimated acoustic wave beams are used. Increasing the number of collimated acoustic wave beam generators may reduce the number of scans. For the 46" panel having a frame rate of 60Hz, each acoustic pulse is 31μs long. For a 5MHz wave, each pulse is about 155 cycles, which covers approximately 4" in space.

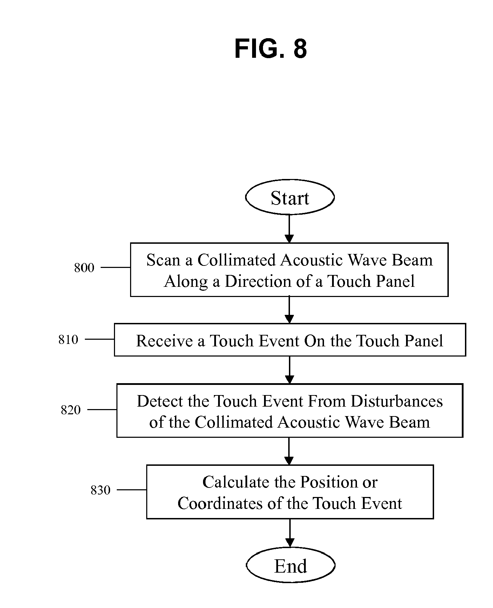

FIG. 8 illustrates a method of detecting a touch event by scanning a collimated acoustic wave beam across a touch panel according to some embodiments of the present invention. However, the present invention is not limited to the sequence or number of the operations of the method shown in FIG. 8, and can be altered into any desired sequence or number of operations as recognized by a person of ordinary skill in the art. For example, in some embodiments, the order may vary, or the method may include fewer or additional operations.

Referring to FIG. 8, the process starts, and at block 800, a generator scans a collimated acoustic wave beam along a direction (e.g., a predetermined direction) of a touch panel. The generator, for example, may include a linear array of multiple acoustic oscillators (e.g., a linear array of multiple piezoelectric transducers or wave generators) to excite a collimated acoustic wave beam at a frequency (e.g., a predetermined frequency) in the direction along a surface of the touch panel. The collimation of the collimated acoustic wave may depend on the size and the oscillation frequency of wave generators in the generator. The direction (e.g., propagation direction) of the collimated acoustic wave beam may be controlled by a phase delay between the wave generators of the generator.

At block 810, a touch event is received on the touch panel. The touch event may be transmitted by a user's finger, a touch pen, etc. The touch event reflects a portion of the collimated acoustic wave from propagating along its intended direction.

At block 820, the disturbed portion of the collimated acoustic wave beam is detected by a detector. The detector, for example, may include a piezoelectric transducer or an array of piezoelectric transducers to detect the collimated acoustic wave at the excited frequency. The detector may determine the location of the touch event by using, for example, orthogonal base property as shown in equation (4) above.

At block 830, the position or coordinates of the touch event is calculated by triangulating a time of flight of the received re-directed portion corresponding to the collimated acoustic wave beam by the detector as described above.

Accordingly, in some embodiments of the present invention, a touch event may be detected by directionally scanning collimated acoustic waves across a touch panel, and detecting disturbances to the collimated acoustic waves from the touch event to triangulate a position or coordinates of the touch event. By increasing the number of generators and detectors, more simultaneous touch events may be accommodated, while reducing or preventing positional ambiguities. Thus, a touch panel based on acoustic technologies capable of supporting true multi-touch events is provided.

**Claims**

1. A touch panel (100) comprising:

   a touch area (104);
   a collimated acoustic wave generator (106) at a periphery of the touch area (104) to generate a collimated acoustic wave across the touch area (104); and
   a detector (108) at the periphery of the touch area (104) to detect the collimated acoustic wave.

2. The touch panel (100) of claim 1, wherein the collimated acoustic wave generator (106) comprises a linear array of piezoelectric transducers.

3. The touch panel (100) of claim 2, wherein the linear array of piezoelectric transducers are configured to control a scanning direction of the collimated acoustic wave by adjusting a phase delay between each of the piezoelectric transducers.

4. The touch panel (100) of at least one of claims 1-3, comrpsing a plurality of collimated acoustic wave generators (106), and at least one of the plurality of collimated acoustic wave generators (106) is configured to generate a collimated acoustic wave having a different frequency than that of another one of the collimated acoustic wave generators (106).

5. The touch panel (100) of claim 4, wherein the plurality of collimated acoustic wave generators (106) are arranged non-collinearly at the periphery of the touch area (104).

6. The touch panel (100) of claim 5, wherein each of the plurality of collimated acoustic wave generators (106) are configured to scan collimated acoustic waves across the touch area (104), and at least one of the collimated acoustic waves reaches a first touch event concurrently when another one of the collimated acoustic waves reaches a second touch event.

7. The touch panel (100) of at least one of claims 1-6, wherein the detector (108) is configured to detect disturbances of the collimated acoustic wave when a touch event is in a path of the collimated acoustic wave.

8. The touch panel (100) of claim 7, wherein the detector (108) is configured to detect a source of the disturbances according to frequency or time of origin.

9. The touch panel (100) of claim 8, comprising a plurality of detectors (108), and the plurality of detectors (108) are configured to triangulate a coordinate of the touch event.

10. A display device comprising:

    a display area (104); and
    a touch panel (100) according to at least one of claims 1-9, on the display area (104), the touch panel (100) comprising:

        a substrate (102) covering the display area (104);
        the touch area (104) on the substrate (102) corresponding to a display area;

the collimated acoustic wave generator (106) at the periphery of the substrate (102) to excite a collimated acoustic wave across the touch area (104); and

the detector (108) at the periphery of the substrate (102) to detect the collimate acoustice wave.

11. The display device of claim 10, wherein the plurality of collimated acoustic wave generators (106) are arranged non-collinearly at the periphery of the substrate (102).

12. A method for detecting a touch event, the method comprising:

scanning a collimated acoustic wave across a touch area (104) of a touch panel;

receiving, at the touch area (104), the touch event;

detecting the touch event from disturbances of the collimated acoustic wave corresponding to the touch event; and

calculating a position of the touch event.

13. The method of claim 12, wherein the scanning of the collimated acoustic wave comprises:

exciting the collimated acoustic wave from a linear array of piezoelectric transducers; and

controlling a scanning direction of the collimated acoustic wave by controlling a phase delay between each transducer of the linear array of piezoelectric transducers.

14. The method of at least one of claims 12 or 13, wherein the collimated acoustic wave form an orthogonal base in a time domain, and the calculating of the position of the touch event utilizes the orthogonal base.

15. The method of at least one of claims 12 to 14 further comprising:

reducing boundary reflections of the collimated acoustic wave at boundaries of the touch panel (100) by absorption and/or impedance matching.

FIG. 1

EP 2 902 890 A2

FIG. 2A

FIG. 2B

106

102

104

108

FIG. 3

300

302

EP 2 902 890 A2

## FIG. 4

FIG. 5

EP 2 902 890 A2

FIG. 6

FIG. 7

$T_j(r_j, \phi_j)$

$S_i(\omega_i, \phi_i, r, t)$

Y

X

# FIG. 8

Start

800 — Scan a Collimated Acoustic Wave Beam
Along a Direction of a Touch Panel

810 — Receive a Touch Event On the Touch Panel

820 — Detect the Touch Event From Disturbances
of the Collimated Acoustic Wave Beam

830 — Calculate the Position or
Coordinates of the Touch Event

End

EP 2 902 890 A2